# EUROPÄISCHE PATENTSCHRIFT

(11) **EP 0 384 131 B1**
(45) Veröffentlichungstag und Bekanntmachung des Hinweises auf die Patenterteilung: **31.03.1993**
(21) Anmeldenummer: 90101249.2
(22) Anmeldetag: 23.01.1990
(51) Int. Cl.: H02K 5/22

(54) **Elektro-Aussenläufermotor mit Schutzleiter-Anschlussteil**
Electrical external-rotor motor with protective wire connection element
Moteur électrique à rotor extérieur avec un élément de raccordement de conducteur de protection

(30) Priorität: 24.02.1989 DE 3905773
(43) Veröffentlichungstag der Anmeldung: 29.08.1990
(73) Patentinhaber: ebm Elektrobau Mulfingen GmbH & Co., D-74671 Mulfingen (DE)
(72) Erfinder: Erneker, Roland, D-7118 Künzelsau-Amrichshausen (DE); Mezger, Paul, D-6990 Bad Mergentheim-Rengershausen (DE)
(74) Vertreter: Zapf, Christoph, Dipl.-Ing.

(56) Entgegenhaltungen:
- EP-A- 0 026 833
- DE-C- 2 951 864
- DE-U- 7 630 468

## Beschreibung

Die vorliegende Erfindung betrifft einen Elektro-Außenläufermotor, bestehend aus einem Stator und einem diesen umschließenden Außenläufer, wobei der Stator ein Statorblechpaket, Statorwicklungen und zumindest auf einer Stirnseite einen sich axial in Richtung eines von den Statorwicklungen gebildeten Wickelkopfes erstreckenden Stirnisolationsschaft aufweist, wobei der Stator über ein sich axial durch den Stirnisolationsschaft hindurch in eine axiale, zentrische Öffnung des Statorblechpaketes erstreckendes Lagertragrohr an einem Motorflansch befestigt ist, und wobei Motor-Anschlußleiter in einem zwischen dem Motorflansch und dem Stator-Wickelkopf gebildeten Anschlußbereich angeschlossen sind und ein Schutzleiter zumindest mit dem Statorblechpaket leitend verbundenen ist.

Ein derartiger Motor ist aus der DE-PS 29 51 864 bekannt. Hierbei ist der Schutzleiter mit seinem abisolierten, gegebenenfalls mit einer Aderendhülse versehenen Ende in eine in der Nähe des äußeren Umfangs des Statorblechpaketes angeordnete axiale Einsteckbohrung gesteckt und in dieser Einsteckbohrung durch seitliches Verstemmen des Statorblechpaketes festgeklemmt. Der während der Montage des bekannten Motors durchzuführende Anschluß des Schutzleiters ist daher schwierig und zeitaufwendig, so daß sich nachteiligerweise hohe Montagekosten ergeben, die noch dadurch gesteigert werden, daß ein geeignetes Stemmwerkzeug bzw. eine gesonderte Verstemmvorrichtung erforderlich ist.

Der Erfindung liegt daher die Aufgabe zugrunde, den bekannten Motor der gattungsgemäßen Art so zu verbessern, daß der Anschluß des Schutzleiters einfacher und damit kostengünstiger durchführbar ist.

Erfindungsgemäß wird dies dadurch erreicht, daß der Schutzleiter über ein Schutzleiter-Anschlußteil angeschlossen ist, wobei das Anschlußteil einen sich zwischen dem Lagertragrohr und dem Stirnisolationsschaft axial in Richtung des Statorblechpaketes erstreckenden Mittenabschnitt aufweist, der sich mit einem mit dem Schutzleiter verbundenen, ersten Endabschnitt in den Anschlußbereich erstreckt, und der zur elektrischen Verbindung einen durch Anlage einerseits an dem Statorblechpaket und andererseits an dem Lagertragrohr kraft-und/oder formschlüssig gehaltenen, zweiten Endabschnitt aufweist.

Bei Verwendung eines metallischen Lagertragrohres ist damit auch dieses und auch der mit dem Lagertragrohr verbundene Motorflansch mit dem Schutzleiter verbunden.

Aufgrund der erfindungsgemäßen Ausgestaltung vereinfacht sich der Anschluß des Schutzleiters an dem Statorblechpaket erheblich, da lediglich das bereits mit dem Schutzleiter verbundene Anschlußteil vor dem Einpressen des Lagertragrohres in das Statorblechpaket zwischen diese beiden Teile eingeführt zu werden braucht. Durch das Einpressen des Lagertragrohres erfolgt dann selbsttätig die Kontaktierung im Bereich des zweiten Endabschnittes des Anschlußteils. Das erfindungsgemäße Schutzleiter-Anschlußteil kann vorteilhafterweise vor der eigentlichen Montage des Motors mit einem Motor-Anschlußkabel vorkonfektioniert werden, so daß sich die eigentliche Motormontage sehr viel einfacher durchführen läßt.

Weitere vorteilhafte Ausgestaltungsmerkmale der Erfindung sind in den Unteransprüchen enthalten.

Der mittelbare Anschluß eines Schutzleiters an einem Elektromotor über ein gesondertes Anschlußteil ist an sich bekannt. So beschreibt die DE-OS 30 45 397 einen Elektromotor mit einem Lagerschild, der auf seiner Außenseite eine taschenförmige Aufnahme für einen Schutzleiter-Stecker aufweist. Dabei ist der Stecker mittels eines Preßstempels in die taschenförmige Aufnahme des Lagerschildes eingepreßt. Der Schutzleiter-Stecker dient dann zum Aufstecken eines mit dem Schutzleiter verbundenen Steckverbinders. Eine Übertragung dieser Lehre auf einen gattungsgemäßen Außenläufermotor würde dazu führen, daß an dem Motorflansch eine entsprechende taschenförmige Aufnahme mit einem eingepreßten Verbinderteil ausgebildet wäre. Hiervon macht die vorliegende Erfindung jedoch keinen Gebrauch.

Aus dem DE-GM 76 30 468 ist eine weitere Art des Schutzleiteranschlusses für Motoren, und zwar hier für einen Innenläufermotor, bekannt. Bei diesem bekannten Motor ist zwischen einem Lagerbügel und einem Ständerblechpaket eine Schutzleiter-Anschlußklemme in einer Einlegenut des Lagerbügels festgeklemmt. Dabei besitzt die Schutzleiterklemme Übermaß gegenüber der Einlegenut, so daß die Klemme bei der Montage von Lagerbügel und Ständerblechpaket in die Nut eingepreßt wird. Diese Lehre läßt sich nicht auf einen gattungsgemäßen Außenläufermotor übertragen, da der mit dem Lagerbügel nur in etwa vergleichbare Motorflansch nicht mit dem Statorblechpaket in Verbindung steht. Deshalb ließe sich auch zwischen diesen Teilen kein Anschlußteil für den Schutzleiter haltern.

Anhand der Zeichnung soll im folgenden die Erfindung beispielhaft näher erläutert werden. Dabei zeigen:
- Fig. 1: eine teilgeschnittene Seitenansicht eines erfindungsgemäßen Außenläufermotors,
- Fig. 2: einen Axialschnitt des in diesem Fall einstückig mit dem Motorflansch verbundenen Lagertragrohres,
- Fig. 3: eine Schnittdarstellung einer Isolierkappe,
- Fig. 4: eine teilgeschnittene Seitenansicht des Stators des erfindungsgemäßen Außenläufermotors,
- Fig. 5: eine Draufsicht auf den Anschlußbereich des Stators in Pfeilrichtung V gemäß Fig. 4,
- Fig. 6: eine Perspektivdarstellung einer ersten Ausführungsform eines erfindungsgemäßen Schutzleiter-Anschlußteils,
- Fig. 7: eine zweite Ausführungsform des Anschlußteils,
- Fig. 8: eine dritte Ausführungsform des Anschlußteils,
- Fig. 9: eine Darstellung analog zu Fig. 1 mit einer vierten Ausführungsform eines erfindungsgemäßen Schutzleiter-Anschlußteils,
- Fig. 10: eine Darstellung analog zu Fig. 5 für die Motorausführung von Fig. 9 und
- Fig. 11: eine gegenüber Fig. 9 und 10 vergrößerte Perspektivdarstellung der vierten Ausführungsform des Anschlußteils.

In den verschiedenen Zeichnungsfiguren sind gleiche bzw. gleichwirkende Teile und Komponenten stets mit den gleichen Bezugsziffern bezeichnet.

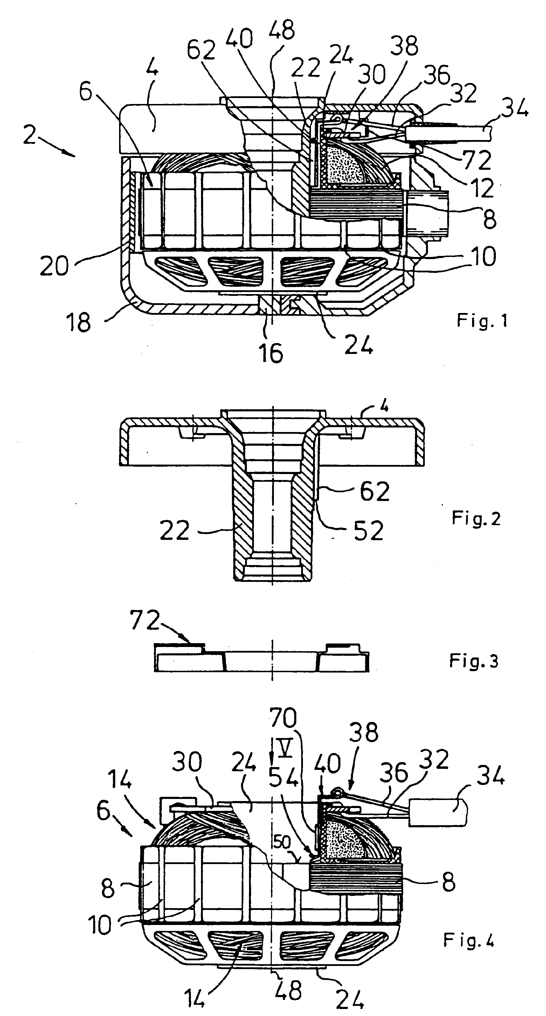

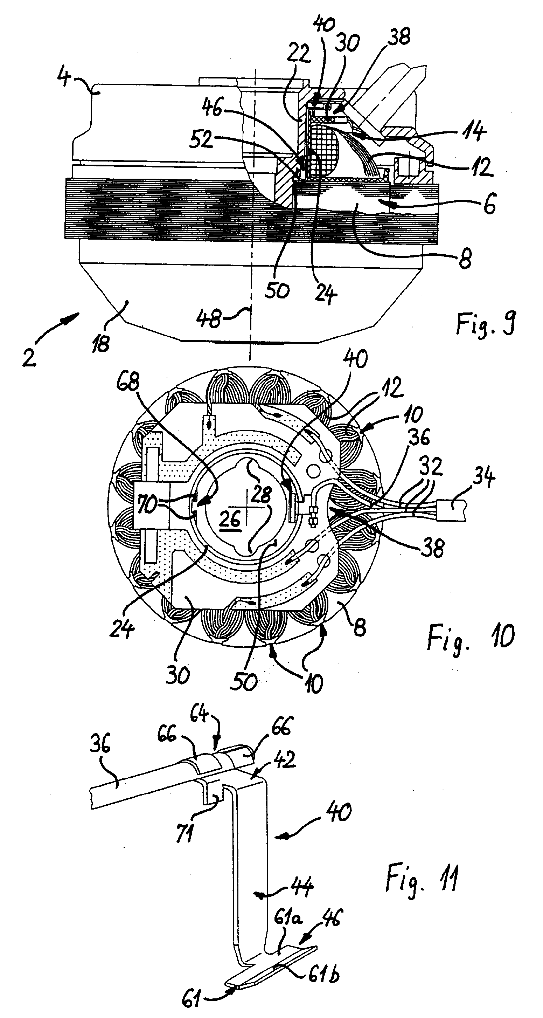

Gemäß Fig. 1 bis 5 sowie Fig. 9 und 10 besteht ein erfindungsgemäßer Außenläufermotor 2 aus einem an einem scheiben- oder kappenförmigen Motorflansch 4 befestigten Stator 6 mit einem Statorblechpaket 8 und in Nuten 10 des Blechpaketes 8 angeordneten Statorwicklungen 12, die auf beiden Stirnseiten des Stators jeweils einen Wickelkopf 14 bilden. Weiterhin weist der erfindungsgemäße Motor 2 einen den Stator 6 auf seiner dem Motorflansch 4 abgekehrten Seite glockenförmig umschließenden, in nicht dargestellten Lagerelementen über eine Läuferwelle 16 drehbar gelagerten Außenläufer 18 auf, der nur in Fig. 1 und 9 teilweise dargestellt ist. Hierbei zeigt die linke Seite der Fig. 1 einen Außenläufer 18, der innenseitig einen das Statorblechpaket 8 umschließenden, ringförmigen Permanentmagnet 20 trägt. Auf der rechten Seite der Fig.1 sowie in Fig. 9 ist ein Außenläuferrotor 18 dargestellt, der als Kurzschlußläuferrotor ausgeführt ist.

Der Motorflansch 4 ist in den dargestellten Ausführungsbeispielen einstückig mit einem Lagertragrohr 22 beispielsweise aus Aluminium-Druckguß ausgebildet. Dieses Lagertragrohr 22 dient zur Aufnahme der nicht dargestellten, zur Lagerung der Läuferwelle 16 vorgesehenen Lagerelemente.

Auf beiden Stirnseiten des Statorblechpaketes 8 ist jeweils eine Isolier-Endscheibe mit einem sich axial in Richtung des Motorflansches 4 bzw. in Richtung des Bodens der Rotorglocke 18 erstreckenden, rohrförmigen Stirnisolationsschaft 24 angeordnet. Die Endscheiben dienen zusammen mit den Stirnisolationsschäften 24 zur Isolierung einerseits zwischen dem Statorblechpaket 8 und den Statorwicklungen 12 und andererseits zwischen dem Lagertragrohr 22 und den Statorwicklungen 12.

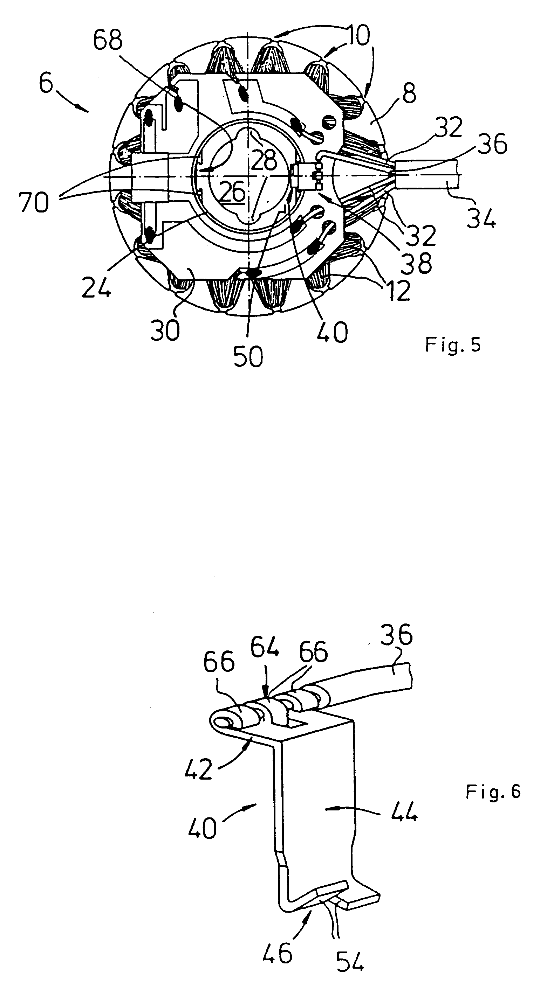

Das Lagertragrohr 22 erstreckt sich von der Seite des Motorflansches 4 her axial durch den hier angeordneten Stirnisolationsschaft 24 hindurch und ist in eine axiale, zentrische Öffnung 26 (Fig. 5 und 10) des Statorblechpaketes 8 eingepreßt. Zur relativen Ausrichtung des Lagertragrohres 22 und des Stators 6 bzw. des Statorblechpaketes 8 können in der zentrischen Öffnung 26 des Statorblechpaketes 8 axiale Nuten 28 gebildet sein, in die entsprechende Stegansätze (nicht dargestellt) am Außenumfang des Lagertragrohres 22 formschlüssig eingreifen.

In den dargestellten Ausführungsbeispielen der Erfindung ist an dem dem Motorflansch 4 zugekehrten Stirnisolationsschaft 24, d.h. an dessen den Wickelkopf 14 axial überragendem Ende, eine parallel zum Motorflansch 4 angeordnete Leiterplatte 30 befestigt. Diese Leiterplatte 30 dient zum Verschalten der Enden der Statorwicklungen 12 und zum Verbinden dieser Enden mit den Enden von Motor-Anschlußleitern 32 eines Anschlußkabels 34. Anstelle eines Kabels können jedoch auch Einzelleiter vorgesehen sein. Weiterhin ist ein Schutzleiter 36 vorgesehen, der zumindest mit dem Statorblechpaket 8 leitend verbunden ist. Der Anschluß der Anschlußleiter 32 erfolgt damit durch Auflöten auf Leiterbahnen der Leiterplatte 30 in einem zwischen dem Stator-Wickelkopf 14 und dem Motorflansch 4 gebildeten Anschlußbereich 38.

Erfindungsgemäß ist nun vorgesehen, daß der Schutzleiter 36 mittelbar über ein Schutzleiter-Anschlußteil 40 zumindest mit dem Statorblechpaket 8 verbunden ist.

Wie insbesondere in den Fig. 6 bis 8 sowie 11 erkennbar ist, weist das Anschlußteil 40 hierzu erfindungsgemäß einen in dem Anschlußbereich 38 angeordneten und mit dem Schutzleiter 36 leitend verbundenen, ersten Endabschnitt 42 auf. An diesen ersten Endabschnitt 42 schließt sich ein sich von dem Anschlußbereich 38 axial zwischen dem Lagertragrohr 22 und dem Stirnisolationsschaft 24 in Richtung des Statorblechpaketes 8 erstreckender Mittenabschnitt 44 an. Dieser Mittenabschnitt 44 geht erfindungsgemäß in einen zur elektrischen Verbindung kraft- und/oder formschlüssig zwischen dem Statorblechpaket 8 und dem Lagertragrohr 22 angeordneten, zweiten Endabschnitt 46 über. Gemäß Fig. 1, 4 und 5 sowie Fig. 9 und 10 verläuft dabei der erste Endabschnitt 42 des Anschlußteils 40 ausgehend von dem axial angeordneten Mittenabschnitt 44 etwa rechtwinklig von der Motor-Drehachse 48, d.h. von dem Lagertragrohr 22, weg nach außen und ist dabei etwa parallel zu der Leiterplatte 30 zwischen dieser und dem Motorflansch 4 in dem Anschlußbereich 38 angeordnet. Ferner verläuft der zweite Endabschnitt 46 des Anschlußteils 40 ausgehend von dem axialen Mittenabschnitt 44 etwa rechtwinklig in Richtung der Motor-Drehachse 48 nach innen und liegt erfindungsgemäß einerseits an der stirnseitigen Oberfläche 50 des Statorblechpaketes 8 und andererseits an einer dieser zugekehrten, auf dem Außenumfang des Lagertragrohres 22 gebildeten Andruckfläche 52 (siehe Fig. 2 und 9) an.

Hierbei ist es erfindungswesentlich, daß der zweite Endabschnitt 46 des Anschlußteils 40 derart federelastisch ausgebildet ist, daß er unter elastischer Vorspannung zwischen dem Statorblechpaket 8 und dem Lagertragrohr 22 angeordnet ist, d.h. mit einer elastischen Anpreßkraft an der Oberfläche 50 des Statorblechpaketes 8 und der Andruckfläche 52 des Lagertragrohres 22 anliegt.

In der in Fig. 6 dargestellten, ersten Ausführungsform des Anschlußteils 40 besteht hierzu der zweite Endabschnitt 46 aus zwei federelastischen Zungen 54, die - vor der Montage des Anschlußteils 40 - derart abgewinkelt sind, daß sie in verschiedenen, winklig zueinander angeordneten Ebenen liegen. Hierdurch erfolgt bei der Montage, d.h. beim Einpressen des Lagertragrohres 22 in die zentrische Öffnung 26 des Statorblechpaketes 8, eine elastische Verformung der Zungen 54 zwischen der stirnseitigen Oberfläche 50 des Statorblechpaketes 8 und der Andruckfläche 52 des Lagertragrohres 22. Hierdurch wird eine gute und bleibende Kontaktierung erreicht.

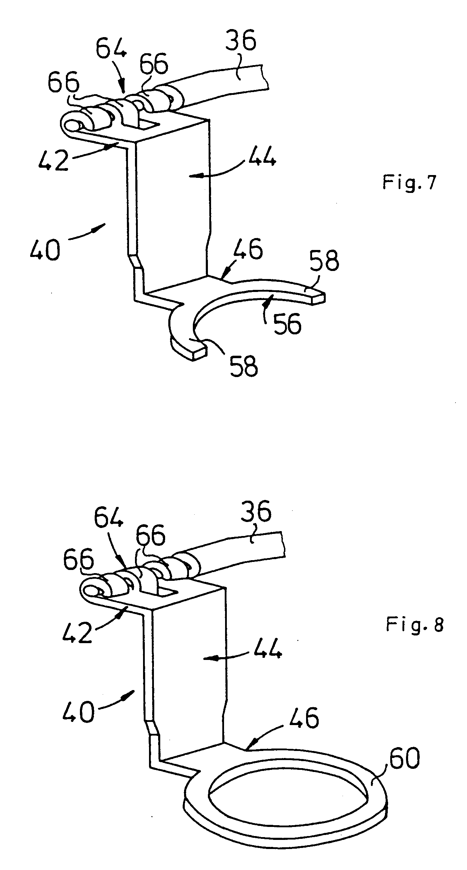

In der in Fig. 7 dargestellten, zweiten Ausführungsform besitzt der zweite Endabschnitt 46 des Anschlußteils 40 einen das Lagertragrohr 22 umfänglich teilweise umgreifenden Ringsegmentteil 56 mit zwei bogenförmigen Armen 58, deren Krümmung an den Durchmesser des Lagertragrohres 22 angepaßt ist. Zum Erzeugen der elastischen Vorspannung ist hierbei vorgesehen, daß die beiden Arme 58 - vor der Montage des Anschlußteils 40 - gewölbt oder gewellt oder aber derart abgewinkelt sind, daß sie in verschiedenen, winklig zueinander angeordneten Ebenen liegen (in Fig. 7 nicht erkennbar).

In der in Fig. 8 dargestellten, dritten Ausführungsform weist der zweite Endabschnitt 46 des Anschlußteils 40 einen das Lagertragrohr 22 umschließenden Ringteil 60 auf, der vorzugsweise federringartig, vor Montage beispielsweise gewölbt oder gewellt, ausgebildet ist.

In dem in Fig. 11 dargestellten, vierten Ausführungsbeispiel besteht der zweite Endabschnitt 46 des Anschlußteils 40 aus einem rechtwinklig zu dem Mittenabschnitt 44 und etwa tangential zu dem Lagertragrohr 22 angeordneten Quersteg 61, der vorzugsweise aus zwei Abschnitten besteht, nämlich einem mit dem Mittenabschnitt 44 verbundenen, parallel zu der stirnseitigen Oberfläche 50 des Statorblechpaketes 8 und zu der Andruckfläche 52 des Lagertragrohrs 22 angeordneten, ersten Stegabschnitt 61a und einem dem Mittenabschnitt 44 abgekehrten, zumindest vor der Montage stumpfwinklig aus der Ebene des ersten Stegabschnittes 61a von der Oberfläche 50 nach oben abgebogenen, zweiten Stegabschnitt 61b.

Wie insbesondere in Fig. 1 und 2 erkennbar ist, weist das Lagertragrohr 22 in seinem dem Mittenabschnitt 44 des Anschlußteils 40 zugekehrten Umfangsbereich einen axialen Stegansatz 62 auf, an dessen dem Statorblechpaket 8 zugekehrtem Ende die an dem zweiten Endabschnitt 46 anliegende Andruckfläche 52 gebildet ist. Diese erfindungsgemäße Ausführungsform eignet sich insbesondere in Verbindung mit der Ausführungsform des Anschlußteils 40 gemäß Fig. 6.

In der in Fig. 9 dargestellten, alternativen Ausführungsform ist das Lagertragrohr 22 im Bereich des zweiten Endabschnittes 46 des Anschlußteils 40 über eine Ringstufe derart im Durchmesser reduziert, daß diese Ringstufe die an dem zweiten Endabschnitt 46 anliegende, in diesem Fall somit ringförmige Andruckfläche 52 bildet. Diese Ausführung eignet sich außer für das Anschlußteil 40 nach Fig. 11 besonders auch in Verbindung mit den Anschlußteilen 40 nach Fig. 7 und 8, darüber hinaus aber natürlich auch mit dem Anschlußteil 40 nach Fig. 6.

In allen dargestellten Ausführungsbeispielen der Erfindung ist der erste Endabschnitt 42 des Anschlußteils 40 in an sich bekannter Weise als Krimpverbinder 64 mit das abisolierte Ende des Schutzleiters 36 kraftschlüssig umgreifenden und so kontaktierenden Leiterkrallen 66 ausgebildet. Alternativ hierzu liegt es jedoch ebenfalls im Rahmen der Erfindung, den ersten Endabschnitt 42 als Lötverbinder oder als Schraubverbinder auszubilden.

Es ist besonders vorteilhaft, wenn der Stirnisolationsschaft 24 auf seiner inneren Umfangsfläche eine das Schutzleiter-Anschlußteil 40 kraft- und/oder formschlüssig halternde Aufnahme 68 aufweist. Aus Gründen einer rationellen Motor-Herstellung, und zwar insbesondere was den Arbeitsablauf bei den Vorbereitungen zum Bewickeln des Stators 6 betrifft, besitzt der Stirnisolationsschaft 24 jedoch vorzugsweise zwei gleichartige, diametral gegenüberliegende Aufnahmen 68, von denen dann aber letztendlich nur eine zur Halterung des Anschlußteils 40 verwendet wird (siehe hierzu Fig. 5 und 9). Die bzw. jede Aufnahme 68 kann mit Vorteil aus zwei axial verlaufenden, einander gegenüberliegenden, den Mittenabschnitt 44 des Anschlußteils 40 seitlich umgreifenden Stegansätzen 70 gebildet sein. Durch diese Aufnahme 68 vereinfacht sich die Montage wesentlich, da beim Einpressen des Lagertragrohres 22 ein Verrutschen des Anschlußteils 40 vorteilhafterweise vermieden wird.

Bei der in Fig. 9 bis 11 dargestellten Ausführungsform der Erfindung besitzt der erste Endabschnitt 42 des Anschlußteils 40 eine sich axial, parallel zu dem Mittenabschnitt 44 erstreckende Haltelasche 71 (siehe insbesondere Fig. 11), die im montierten Zustand (Fig. 9) den Stirnisolationsschaft 24 außen insbesondere klemmend hintergreift. Dies bedeutet, daß der Stirnisolationsschaft 24 in radialer Richtung zwischen der Haltelasche 71 und dem Mittenabschnitt 44 des Anschlußteils 40 angeordnet ist. Durch diese erfindungsgemäße Ausgestaltung ergibt sich insbesondere in Verbindung mit der Aufnahme 68 eine besonders sichere "Vor-Befestigung" des Schutzleiter-Anschlußteils 40 bis zur Montage des Motorflansches 4 bzw. des Lagertragrohrs 22, wie dies im folgenden noch näher erläutert werden wird.

Wie sich insbesondere aus Fig. 1 bis 4 entnehmen läßt, ist weiterhin zwischen dem Motorflansch 4 und dem Stator 6 eine die Leiterplatte 30 einschließlich des ersten Endabschnittes 42 des Anschlußteils 40 abdeckende Isolierkappe 72 angeordnet (in Fig. 9 nicht erkennbar).

Die Montage des erfindungsgemäßen Motors ist sehr einfach und kostengünstig. Das Anschlußkabel 34 bzw. die Anschlußleiter 32 und der Schutzleiter 36 werden zusammen mit der Leiterplatte 30 und dem erfindungsgemäßen Schutzleiter-Anschlußteil 40 vorkonfektioniert. Die Leiterplatte 30 wird nun auf das flanschseitige Ende des Stirnisolationsschaftes 24 aufgesetzt und z.B. durch Verstemmen befestigt. Nun erfolgt der Anschluß der Drahtenden der Statorwicklungen 12 an der Leiterplatte 30, indem diese auf Leiterbahnen der Leiterplatte 30 aufgelötet werden. Das erfindungsgemäße Schutzleiter-Anschlußteil 40 wird nun in den Innenraum des Stirnisolationsschaftes 24 geführt und dort vorzugsweise durch axiales Einschieben in die Aufnahme 68 und/oder durch "Aufstecken" auf den Stirnisolationsschaft 24 mittels der Haltelasche 71 (Fig. 9 bis 11) fixiert ("vorbefestigt"). Nun erfolgt vorzugsweise eine Abdeckung der Leiterplatte 30 mit der Isolierkappe 72 nach Fig. 3. Anschließend wird das Lagertragrohr 22 in den Innenraum des Stators 6, d.h. in die zentrische Öffnung 26 des Statorblechpaketes 8 geschoben und eingepreßt. Durch diesen Einpreßvorgang des Lagertragrohres 22 gelangt dessen Andruckfläche 52 in den Bereich des zweiten Endabschnittes 46 des Anschlußteils 40 und preßt diesen gegen die stirnseitige Oberfläche 50 des Statorblechpaketes 8. Hierdurch erfolgt die elektrische Kontaktierung des Schutzleiteranschlusses zum Statorblechpaket 8 und - da in den bevorzugten Ausführungsbeispielen auch das Lagertragrohr 22 aus Metall besteht - auch die elektrische Verbindung zu dem Lagertragrohr 22 und damit auch zu dem Motorflansch 4.

## Patentansprüche

1. Elektro-Außenläufermotor (2), bestehend aus einem Stator (6) und einem diesen umschließenden Außenläufer (18), wobei der Stator (6) ein Statorblechpaket (8), Statorwicklungen (12) und zumindest auf einer Stirnseite einen sich axial in Richtung eines von den Statorwicklungen (12) gebildeten Wickelkopfes (14) erstreckenden Stirnisolationsschaft (24) aufweist, wobei der Stator (6) über ein sich axial durch den Stirnisolationsschaft (24) hindurch in eine axiale, zentrische Öffnung (26) des Statorblechpaketes (8) erstreckendes Lagertragrohr (22) an einem Motorflansch (4) befestigt ist, und wobei Motor-Anschlußleiter (32) in einem zwischen dem Motorflansch (4) und dem Stator-Wickelkopf (14) gebildeten Anschlußbereich (38) angeschlossen sind und ein Schutzleiter (36) zumindest mit dem Statorblechpaket (8) leitend verbundenen ist,
**dadurch gekennzeichnet,** daß der Schutzleiter (36) über ein Schutzleiter-Anschlußteil (40) angeschlossen ist, wobei das Anschlußteil (40) einen sich zwischen dem Lagertragrohr (22) und dem Stirnisolationsschaft (24) axial in Richtung des Statorblechpaketes (8) erstreckenden Mittenabschnitt (44) aufweist, der sich mit einem mit dem Schutzleiter (36) verbundenen, ersten Endabschnitt (42) in den Anschlußbereich (38) erstreckt, und der zur elektrischen Verbindung einen durch Anlage einerseits an dem Statorblechpaket (8) und andererseits an dem Lagertragrohr (22) kraft- und/oder formschlüssig gehaltenen, zweiten Endabschnitt (46) aufweist.

2. Außenläufermotor nach Anspruch 1,
**dadurch gekennzeichnet,** daß der zweite Endabschnitt des Anschlußteils (40) derart federelastisch ausgebildet ist, daß er unter elastischer Vorspannung an dem Statorblechpaket (8) und dem Lagertragrohr (22) anliegt.

3. Außenläufermotor nach Anspruch 1 oder 2,
**dadurch gekennzeichnet,** daß der zweite Endabschnitt (46) des Anschlußteils (40), ausgehend von dem sich axial erstreckenden Mittenabschnitt (44), etwa rechtwinklig in Richtung der Motor-Drehachse (48) nach innen verläuft und zwischen der stirnseitigen Oberfläche (50) des Statorblechpaketes (8) und einer dieser zugekehrten Andruckfläche (52) des Lagertragrohres (22) an diesen Flächen (50, 52) anliegend angeordnet ist.

4. Außenläufermotor nach Anspruch 3,
**dadurch gekennzeichnet,** daß der zweite Endabschnitt (46) des Anschlußteils (40) aus mindestens zwei Zungen (54) besteht, die vor Montage des Anschlußteils (40) derart abgewinkelt sind, daß sie in verschiedenen, winklig zueinander angeordneten Ebenen liegen.

5. Außenläufermotor nach Anspruch 3,
**dadurch gekennzeichnet,** daß der zweite Endabschnitt (46) des Anschlußteils (40) einen das Lagertragrohr (22) umschließenden Ringteil (60) aufweist, der vorzugsweise federringartig, vor Montage des Anschlußteils (40) beispielsweise gewölbt oder gewellt, ausgebildet ist.

6. Außenläufermotor nach Anspruch 3,
**dadurch gekennzeichnet**, daß der zweite Endabschnitt (46) des Anschlußteils (40) einen das Lagertragrohr (22) umfänglich teilweise umgreifenden Ringsegmentteil (56) mit zwei bogenförmigen Armen (58) aufweist, wobei vorzugsweise die beiden Arme (58) vor Montage des Anschlußteils (40) gewölbt oder gewellt oder derart abgewinkelt sind, daß sie in verschiedenen, winklig zueinander angeordneten Ebenen liegen.

7. Außenläufermotor nach Anspruch 3,
**dadurch gekennzeichnet,** daß der zweite Endabschnitt (46) des Anschlußteils (40) aus einem rechtwinklig zu dem Mittenabschnitt (44) sowie etwa tangential zu dem Lagertragrohr (22) angeordneten Quersteg (61) besteht, der vorzugsweise aus mindestens zwei vor Montage des Anschlußteils (40) in winklig zueinander angeordneten Ebenen liegenden Stegabschnitten (61a, 61b) besteht.

8. Außenläufermotor nach einem oder mehreren der Ansprüche 3 bis 7,
**dadurch gekennzeichnet,** daß das Lagertragrohr (22) in seinem dem Mittenabschnitt (44) des Anschlußteils (40) zugekehrten Umfangsbereich einen axialen Stegansatz (62) aufweist, an dessen dem Stator-blechpaket (8) zugekehrten Ende die an dem zweiten Endabschnitt (46) anliegende Andruckfläche (52) gebildet ist.

9. Außenläufermotor nach einem oder mehreren der Ansprüche 3 bis 8,
**dadurch gekennzeichnet,** daß das Lagertragrohr (22) im Bereich des zweiten Endabschnittes (46) des Anschlußteils (40) eine die an dem zweiten Endabschnitt (46) anliegende Andruckfläche (52) bildende Ringstufe aufweist.

10. Außenläufermotor nach einem oder mehreren der Ansprüche 1 bis 7,
**dadurch gekennzeichnet,** daß der Stirnisolationsschaft (24) auf seiner inneren Umfangsfläche mindestens eine Aufnahme (68) zur kraft- und/oder formschlüssigen Halterung des Schutzleiter-Anschlußteils (40) aufweist.

11. Außenläufermotor nach einem oder mehreren der Ansprüche 1 bis 10,
**dadurch gekennzeichnet,** daß der erste Endabschnitt (42) des Anschlußteils (40) als Krimpverbinder (64) mit Leiterkrallen (66), als Lötverbinder oder als Schraubverbinder ausgebildet ist.

12. Außenläufermotor nach einem oder mehreren der Ansprüche 1 bis 11,
**dadurch gekennzeichnet,** daß der erste Endabschnitt (42) des Anschlußteils (40), ausgehend von dem axial angeordneten Mittenabschnitt (44) etwa rechtwinklig von der Motor-Drehachse (48) weg nach außen verläuft.

13. Außenläufermotor nach einem oder mehreren der Ansprüche 1 bis 12,
**dadurch gekennzeichnet,** daß der erste Endabschnitt (42) des Anschlußteils (40) mindestens eine sich axial, parallel zu dem Mittenabschnitt (44) erstreckende und im montierten Zustand den Stirnisolationsschaft (24) auf seiner Außenumfangsseite kraft- und/oder formschlüssig, insbesondere klemmend, hintergreifende Haltelasche (71) aufweist.

14. Außenläufermotor nach einem oder mehreren der Ansprüche 1 bis 13,
**dadurch gekennzeichnet,** daß an einem den Wickelkopf (14) überragenden Ende des Stirnisolationsschaftes (24) eine parallel zu dem Motorflansch (4) angeordnete Anschluß-Leiterplatte (30) befestigt ist, wobei der erste Endabschnitt (42) des Anschlußteils (40) auf der dem Motorflansch (4) zugekehrten Seite der Leiterplatte (30) etwa parallel zu dieser angeordnet ist.

15. Außenläufermotor nach Anspruch 14,
**dadurch gekennzeichnet,** daß zwischen dem Motorflansch (4) und dem Stator (6) eine die Leiterplatte (30) einschließlich des ersten End-abschnittes (42) des Anschlußteils (40) abdeckende Isolierkappe (72) angeordnet ist.

16. Außenläufermotor nach einem oder mehreren der Ansprüche 1 bis 15,
**dadurch gekennzeichnet,** daß das Schutzleiter-Anschlußteil (40) aus einem einstückigen, gebogenen Blechzuschnitt, insbesondere aus Stahlblech, besteht.

## Claims

1. External-rotor electric motor (2) consisting of a stator (6) and an external rotor (18) enclosing this, whereby the stator (6) has a stator core assembly (8), stator windings (12) and, at least on one front face, an end insulating shaft (24) extending axially in the direction of an end winding (14) formed by the stator windings (12), whereby the stator (6) is attached to a motor flange (4) via a bearing support tube (22) extending axially through the end insulating shaft (24) into an axial, central opening (26) in the stator core assembly (8), and whereby the motor supply leads (32) are connected into a contact area (38) formed between the motor flange (4) and the stator end winding (14), and a protective earth conductor (36) is electrically connected to at least the stator core assembly (8), characterised in that the protective earth conductor (36) is connected via a protective conductor terminal (40), whereby the terminal (40) has a central section (44) extending axially in the direction of the stator core assembly (8) between the bearing support tube (22) and the end insulating shaft (24), said central section extending into the contact area (38) with a first end section (42) connected to the protective earth conductor (36), and which for the electrical connection has a second end section (46) that is retained by shape and/or pressing in contact with the stator core assembly (8) on the one side and with the bearing support tube (22) on the other side.

2. External-rotor motor according to Claim 1, characterised in that the second end section of the terminal (40) is made in the form of a spring so that under initial elastic tension it fits closely against the stator core assembly (8) and the bearing support tube (22).

3. External-rotor motor according to Claim 1 and 2, characterised in that, starting from the axially-extended central section (44), the second end section (46) of the terminal (40), extends inwards approximately at right-angles in the direction of the motor's axis of rotation (48) and, between the end surface (50) of the stator core assembly (8) and a contact face (52) of the bearing support tube (22) opposite thereto, is arranged in close contact with these faces (50, 52).

4. External-rotor motor according to Claim 3, characterised in that the second end section (46) of the terminal (40) consists of at least two tabs (54) that are bent prior to fitting the terminal (40) so that they lie in different planes arranged at an angle to each other.

5. External-rotor motor according to Claim 3, characterised in that the second end section (46) of the terminal has a ring section (60) that is preferably formed, for example, as a curved or corrugated spring washer, prior to fitting the terminal (40).

6. External-rotor motor according to Claim 3, characterised in that the second end section (46) of the terminal (40) has a ring segment section (56) with two arc-shaped arms (58), that partially encloses the periphery of the bearing support tube (22), whereby preferably the two arms (58) are curved or corrugated or bent in such a way prior to fitting the terminal (40) that they lie in different planes arranged at an angle to each other.

7. External-rotor motor according to Claim 3, characterised in that the second end section (46) of the terminal (40) consists of a transverse web (61) arranged at right-angles to the central section (44) and approximately tangentially to the bearing support tube (22), so that prior to fitting the terminal (40) preferably consists of at least two web sections (61a,61b) lying in planes arranged at an angle to each other.

8. External-rotor motor according to one or more of the Claims 3 to 7, characterised in that the bearing support tube (22) has an axial web extension-piece (62) in its peripheral region facing the central section (44) of the terminal (40), at whose end facing the stator core assembly (8) the contact face (52) is formed adjacent to the second end section (46).

9. External-rotor motor according to one or more of the Claims 3 to 8, characterised in that in the region of the second end section (46) of the terminal (40) the bearing support tube (22) has a ring shoulder forming the contact face (52) adjacent to the second end section (46).

10. External-rotor motor according to one or more of the Claims 1 to 7, characterised in that on its inner peripheral face the end insulating shaft (24) has at least one receptacle (68) for retaining the protective conductor terminal (40) by shaping or pressing.

11. External-rotor motor according to one or more of the Claims 1 to 10, characterised in that the first end section (42) of the terminal (40) is formed as a crimp connector (64) with guiding arches (66), as a solder connector or as a screw connector.

12. External-rotor motor according to one or more of the Claims 1 to 11, characterised in that, starting from the axially-arranged central section (44), the first end section (42) of the terminal extends outwards approximately at right-angles away from the motor's axis of rotation (48).

13. External-rotor motor according to one or more of the Claims 1 to 12, characterised in that the first end section (42) of the terminal (40) has at least one retaining lug (71) extending axially, parallel to the central section (44), and in the installed condition grips the end insulating shaft (24) from the rear on its external periphery in a shaping or pressing, particularly clamping, manner.

14. External-rotor motor according to one or more of the Claims 1 to 12, characterised in that a connector circuit board (30) arranged parallel to the motor flange (4) is attached to one end of the end insulating shaft (24) projecting beyond the end winding (14), whereby the first end section (42) of the terminal (40) is arranged on the side of the circuit board (30) facing the motor flange, approximately parallel to this.

15. External-rotor motor according to Claim 14, characterised in that an insulating cap (72) covering the circuit board (30), including the first end section (42) of the terminal (40), is arranged between the motor flange (4) and the stator (6).

16. External-rotor motor according to one or more of the Claims 1 to 15, characterised in that the protective conductor terminal (40) consists of a one-piece, bent sheet-metal stamping, particularly of sheet steel.

## Revendications

1. Moteur électrique à rotor extérieur (2) constitué d'un stator (6) et d'un rotor extérieur (18) entourant ce dernier dans lequel le stator (6) présente un paquet de tôle (8) de stator, des bobines de stator (12) et un corps d'isolation frontal (24) au moins sur un côté frontal, s'étendant axialement en direction d'une tête de bobine (14) formant les bobines du stator (12), dans lequel le stator (6) est fixé à une bride de moteur (4) par un tube-support de palier (22) s'étendant axialement à travers le corps d'isolation frontal (24) au travers d'une ouverture (26) centrale axiale du paquet (8) de tôle du stator, et dans lequel des conducteurs (32) de raccordement du moteur sont raccordés dans une zone de raccordement formée entre la bride (4) du moteur et la tête de bobine (14) du stator et un conducteur de protection (36) est en connexion conductrice au moins avec le paquet de tôle (8) du stator, caractérisé en ce que le conducteur de protection (36) est raccordé à un élément (40) de raccordement de conducteur de protection, dans lequel l'élément (40) de raccordement présente une partie centrale (44) s'étendant axialement entre le tube-support de palier (22) et le corps d'isolation frontal (24) en direction du paquet de tôle (8) du stator, la partie centrale s'étendant avec une partie d'extrémité (42) reliée au conducteur de protection (36) dans la zone de raccordement (38) et présente pour la connexion électrique, une deuxième partie d'extrémité (46) maintenue mécaniquement et/ou élastiquement par une disposition, d'une part au paquet de tôle (8) du stator, et d'autre part au tube-support de palier (22).

2. Moteur à rotor extérieur selon la revendication 1, caractérisé en ce que la deuxième partie d'extrémité de l'élément de raccordement (40) est réalisée de façon élastique, pour qu'elle appuie sous précontrainte élastique contre le paquet de tôle (8) du stator et le tube-support de palier (22).

3. Moteur à rotor extérieur selon la revendication 1 ou la revendication 2, caractérisé en ce que la deuxième partie d'extrémité (46) de l'élément de raccordement (40) s'étend à partir de la partie centrale (44) s'étendant axialement sensiblement à angle droit vers l'intérieur en direction de l'axe de rotation (48) du moteur et est disposée entre la surface (50) du côté frontal du paquet de tôle (8) du stator et une surface de pression (52) du tube-support de palier tournée vers celle-ci en s'appuyant contre ces surfaces (50, 52).

4. Moteur à rotor extérieur selon la revendication 3, caractérisé en ce que la deuxième partie d'extrémité (46) de l'élément de raccordement (40) consiste en au moins deux languettes (54), qui avant montage de l'élément de raccordement (40) sont coudées de façon telle qu'elles soient disposées dans des plans différents faisant un angle entre eux.

5. Moteur à rotor extérieur selon la revendication 3, caractérisé en ce que la deuxième partie d'extrémité (46) de l'élément de raccordement (40) présente un élément annulaire (60) entourant le tube-support de palier (22) qui est avantageusement réalisé en forme de rondelle élastique bombée, par exemple cintrée ou ondulée, avant montage de l'élément de raccordement (40).

6. Moteur à rotor extérieur selon la revendication 3, caractérisé en ce que la deuxième partie d'extrémité (46) de l'élément de raccordement (40) présente un élément de segment annulaire (56) enveloppant circonférentiellement en partie le tube-support de palier (22), avec deux bras arqués (58), dans lequel les deux bras (58) sont avantageusement cintrés ou ondulés ou coudés, avant montage de l'élément de raccordement (40), de façon telle qu'elles soient disposées dans des plans différents faisant un angle entre eux.

7. Moteur à rotor extérieur selon la revendication 3, caractérisé en ce que la deuxième partie d'extrémité (46) de l'élément de raccordement (40) consiste en une entretoise transversale (61) disposée à angle droit avec la partie centrale (44) ainsi que sensiblement tangentiellement avec le tube-support de palier (22), l'entretoise (61) consiste avantageusement en au moins deux parties d'entretoise (61a, 61b) disposées avant montage de l'élément de raccordement (40) dans des plans faisant un angle entre eux.

8. Moteur à rotor extérieur selon une ou plusieurs des revendications 3 à 7, caractérisé en ce que le tube-support de palier (22) présente dans sa zone périphérique tournée vers la partie centrale (44) de l'élément de raccordement (40), un appendice (62) d'entretoise sur l'extrémité duquel tournée vers le paquet de tôle (8) du stator, est formée la surface d'appui (52) adjacente à la deuxième partie d'extrémité.

9. Moteur à rotor extérieur selon une ou plusieurs des revendications 3 à 8, caractérisé en ce que le tube-support de palier (22) présente dans la zone de la deuxième partie d'extrémité (46) de l'élément de raccordement (40), un rebord annulaire formant la surface d'appui (52) adjacente à la deuxième partie d'extrémité (46).

10. Moteur à rotor extérieur selon une ou plusieurs des revendications 1 à 7, caractérisé en ce que le corps d'isolation frontal (24) présente sur sa surface périphérique intérieure au moins un logement (68) pour la fixation élastique et/ou mécanique de l'élément (40) de raccordement de conducteur de protection.

11. Moteur à rotor extérieur selon une ou plusieurs des revendications 1 à 10, caractérisé en ce que la première partie d'extrémité (42) de l'élément de raccordement (40) se présente sous la forme de connecteurs à rétrécissement (64) avec des briffes (66) conductrices, d'une attache à souder ou d'attache à visser.

12. Moteur à rotor extérieur selon une ou plusieurs des revendications 1 à 11, caractérisé en ce que la première partie d'extrémité (42) de l'élément de raccordement (40) s'étend vers l'extérieur sensiblement à angle droit avec l'axe de rotation (48) du moteur à partir de la partie centrale (44) disposée axialement.

13. Moteur à rotor extérieur selon une ou plusieurs des revendications 1 à 12, caractérisé en ce que la première partie d'extrémité (42) de l'élément de raccordement (40) présente au moins un ergot de retenue (71) s'étendant axialement et parallèlement à la partie centrale (44) et qui, dans l'état monté, prend élastiquement et/ou mécaniquement en particulier en pinçant le corps d'isolation frontal (24) sur son côté périphérique extérieur.

14. Moteur à rotor extérieur selon une ou plusieurs des revendications 1 à 13, caractérisé en ce qu'une plaque conductrice (30) de raccordement disposée parallèlement à la bride (4) du moteur est fixée à une extrémité du corps d'isolation frontal (24) dépassant de la tête de bobine (14), d'où il résulte que la première partie d'extrémité (42) de l'élément de raccordement (40) est disposée sur le côté de la plaque conductrice (30) tournée vers la bride (4) du moteur, sensiblement parallèlement à la plaque conductrice (30).

15. Moteur à rotor extérieur selon la revendication 14, caractérisé en ce qu'une calotte isolante (72) recouvrant la plaque conductrice (30) y compris la première partie d'extrémité (42) de raccordement (40), est disposée entre la bride (4) du moteur et le stator (6).

16. Moteur à rotor extérieur selon une ou plusieurs des revendications 1 à 15, caractérisé en ce que l'élément de raccordement (40) de conducteur de protection consiste en une pièce coudée de tôle découpée dans un seul morceau, en particulier une tôle d'acier.
